# FASCICULE DE BREVET EUROPEEN

(11) **EP 3 126 784 B1**
(45) Date de publication et mention de la délivrance du brevet: **20.01.2021**
(21) Numéro de dépôt: 15715197.8
(22) Date de dépôt: 27.03.2015
(51) Int. Cl.: G01D 11/28, G01D 13/26, B60K 37/02

(54) **INDICATEUR DE TABLEAU DE BORD A MONTAGE ARRIERE ET AIGUILLE INDICATRICE ILLUMINEE**
HECKMONTIERTER ARMATURENBRETTINDIKATOR UND BELEUCHTETE INDIKATORNADEL
REAR-MOUNTED DASHBOARD INDICATOR, AND ILLUMINATED INDICATOR NEEDLE

(30) Priorité: 28.03.2014 FR 1452729; 11.04.2014 FR 1453227
(43) Date de publication de la demande: 08.02.2017
(73) Titulaire: MMT SA, 6304 Zug (CH)
(72) Inventeur: STRAHM, Martin, CH-2017 Boudry (CH); DUHAMEL, Clément, 90140 Bourgogne (FR)
(74) Mandataire: IP Trust
(86) Numéro de dépôt international: PCT/EP2015/056692
(87) Numéro de publication internationale: WO 2015/144873

(56) Documents cités:
- WO-A1-2012/143038
- DE-A1- 19 938 336

## Description

### Domaine de l'invention

La présente invention concerne le domaine des indicateurs analogiques destinés par exemple à équiper un tableau de bord automobile, ou ferroviaire ou aéronautique, ou encore industriel.

L'invention concerne plus particulièrement les modules comportant une fonction d'éclairage de l'aiguille indicatrice.

### Etat de la technique

L'état de la technique comprend tout d'abord le brevet EP1660843 de la demanderesse. Ce document décrit un actionneur électrique de tableau de bord constitué par un moteur électrique entraînant un indicateur caractérisé en ce que le moteur électrique présente un axe de sortie creux, débouchant sur deux faces opposées du moteur sans former de protubérance par rapport aux dites faces opposées et en ce que ledit indicateur présente un organe d'accouplement mâle présentant une section complémentaire à la section intérieure dudit axe de sortie creux du moteur, l'une des faces du moteur présentant des moyens de connexion de type mâle ou femelle perpendiculaires à ladite face.

La demande de brevet WO2010010777 décrit un autre exemple de structure éclairante d'indicateur. Un boîtier contient un rotor, un mécanisme de rotation et d'entraînement comprenant un pignon intermédiaire et un pignon de sortie. Le mécanisme de rotation et d'entraînement transmet au pignon de sortie un mouvement de rotation entraînant l'indicateur. Une source de lumière est placée pour éclairer l'indicateur composé d'un matériau permettant la transmission de la lumière provenant de la source de lumière.

Dans ces solutions, le moteur présente un sous-composant à axe creux permettant l'insertion de l'axe de l'aiguille formant un ensemble optique unique avec la partie indicatrice de l'aiguille. La zone frontale arrière de l'axe de l'aiguille est éclairée par le faisceau lumineux émis par une diode électroluminescente montée sur la surface extérieure de la partie arrière du boîtier du moteur.

D'autres documents de l'art antérieur, tels les brevets japonais JP09101182 ou JP11311547 décrivent des solutions où une source lumineuse, généralement une LED, éclaire l'axe de rotation de l'aiguille.

Le document DE 199 38 336 A1 décrit un autre exemple de module indicateur de tableau de bord connu.

On a également proposé dans l'état de la technique une solution équivalente décrite dans la demande de brevet WO2012/143038 A1 concernant un moteur incorporant un guide de lumière formant un chemin optique replié sur 180°, logé à l'intérieur même du moteur. Ce document décrit une solution dont l'objectif est d'augmenter l'espace disponible sur le tableau de bord, autour du moteur. Cet effet technique est très discutable, dans la mesure où l'intégration d'un guide optique conduit probablement à une augmentation de la dimension transversale du moteur, et l'encombrement global est donc sans doute très proche de celui des solutions où le guide de lumière est extérieur au moteur.

### Inconvénient de l'art antérieur

La solution proposée par la demande de brevet WO2012/143038 A1 présente plusieurs inconvénients.

En premier lieu, il est nécessaire de prévoir une ouverture au niveau de la face avant du boîtier pour permettre la transmission de la lumière produite par la source lumineuse. Les tolérances de fabrication conduisent à un risque de pénétration de particules solides (poussières, particules métalliques ou minérales,...) dans le moteur, ce qui constitue une source majeure de pertes de performances et de précision.

Un deuxième inconvénient est la diminution de l'espace disponible pour loger le train d'engrenage et les composants électromagnétiques (bobines, rotor). Le volume occupé par le guide de lumière oblige de concevoir un moteur présentant une section transversale réduite, ou à élargir la section transversale du boîtier contenant le moteur et le guide de lumière.

Un autre inconvénient de la solution de l'art antérieur proposée par le brevet WO2012/143038 A1 concerne la dissipation de la chaleur produite par la source d'éclairage. Compte tenu du confinement de la source lumineuse placée dans le moteur, cette solution oblige l'utilisation de diodes électroluminescentes de faible puissance ou de forte efficacité énergétique, donc couteuses.

### Solution apportée par l'invention

Afin de remédier à ces inconvénients, l'invention concerne un module indicateur de tableau de bord selon la revendication 1.

Selon son acception la plus générale, le module indicateur de tableau de bord comprend un moteur pas-à-pas apte à entraîner une aiguille éclairée et un circuit imprimé supportant au moins une source lumineuse, ledit actionneur présentant des connections électriques directement soudées sur le circuit imprimé, la source lumineuse d'éclairage de l'aiguille étant soudée sur le circuit imprimé en une zone située à l'extérieur de la surface du circuit imprimé couverte par le moteur et le module comportant un guide optique transmettant la lumière produite par la source jusqu'à l'ouverture frontale arrière du moteur, coaxiale avec soit d'une part l'axe creux de la roue de sortie dudit moteur destiné à recevoir ladite aiguille éclairée, soit d'autre part avec l'axe transparent (translucide ou légèrement teinté) de la roue de sortie dudit moteur destiné à recevoir ladite aiguille éclairée, ledit guide optique comportant des moyens pour transmettre un faisceau directif coaxial à l'axe de ladite aiguille éclairée.

La « surface du circuit imprimé couverte par le moteur » correspond à la surface déterminée par la projection de la section transversale du stator de l'actionneur sur le plan définie par la surface du circuit imprimée.

De préférence, ledit guide de lumière est formé d'un bloc transparent monolithique, présentant au moins un prisme présentant des prolongements latéraux s'étendant à l'extérieur de la section du chemin optique, lesdits prolongements assurant le positionnement et la tenue mécanique dudit guide de lumière par rapport au boîtier du moteur.

Selon un mode de réalisation préféré, la zone d'entrée dudit guide de lumière présente une jupe de collimation présentant des surfaces intérieure et extérieure polies miroir, entourant une lentille.

Avantageusement, les surfaces extérieures entourant le chemin optique sont polies miroir, et ne sont en contact avec aucun élément porteur à l'exception de la zone de sortie et desdits prolongements latéraux.

De préférence, la zone de sortie dudit guide de lumière est entourée par une zone de couplage mécanique avec le boîtier dudit moteur, présentant un trou entourant l'interface optique de sortie et une surface annulaire périphérique complémentaire de la surface entourant l'orifice axial arrière du boîtier du moteur.

Selon un mode de réalisation particulier, ladite zone de couplage mécanique est prolongée par au moins un ergot de positionnement par rapport à des zones de guidage complémentaires prévues sur le boitier du moteur, et un ergot de clipsage assurant le verrouillage de la zone de sortie sur le boîtier du moteur.

Avantageusement, ledit circuit imprimé comporte en outre au moins une source lumineuse additionnelle, dirigée en direction opposée à la source éclairant ledit guide de lumière. Ces sources sont utilisées pour l'illumination des témoins lumineux ou pour l'illumination de l'aiguille par une LED dont le corps passe par un perçage circuit imprimé et éclaire le guide de lumière.

Le guide de lumière assure la transmission de lumière entre la source lumineuse et le moteur du module indicateur de tableau de bord pour illuminer l' aiguille entraînée, et présente une zone d'entrée dudit guide de lumière présente une jupe de collimation présentant des surfaces intérieure et extérieure polies miroir, entourant une lentille, en ce que les surface extérieures entourant le chemin optique sont polis miroir, et ne sont en contact avec aucun élément porteur à l'exception de la zone de sortie et desdits prolongements latéraux et en ce que la zone de sortie dudit guide de lumière est entourée par une zone de couplage mécanique avec le boîtier dudit moteur, présentant un trou entourant l'interface optique de sortie et une surface annulaire périphérique complémentaire de la surface entourant l'orifice axial arrière du boîtier du moteur.

### Description détaillée d'un exemple non limitatif de réalisation d'un module selon l'invention

L'invention sera mieux comprise à la lecture de la description qui suit, se référant à des exemples non limitatifs de réalisation illustrés par les dessins annexés où :
- la figure 1 représente une vue schématique, en coupe selon un plan axial, d'un module selon l'invention
- la figure 2 représente une vue en perspective d'un guide de lumière selon l'invention
- la figure 3 représente une vue en trois-quarts arrière du guide de lumière après insertion dans le boitier dudit module
- la figure 4 représente une vue en coupe longitudinale du module
- la figure 5 détaille l'interface d'insertion et de tenue du guide lumière dans la pièce de liaison
- la figure 6 représente une vue de l'assemblage moteur et guide qui permet de mettre en avant les surfaces autorisant une limitation de la pollution lumineuse créée par la source lumineuse et le guide de lumière.

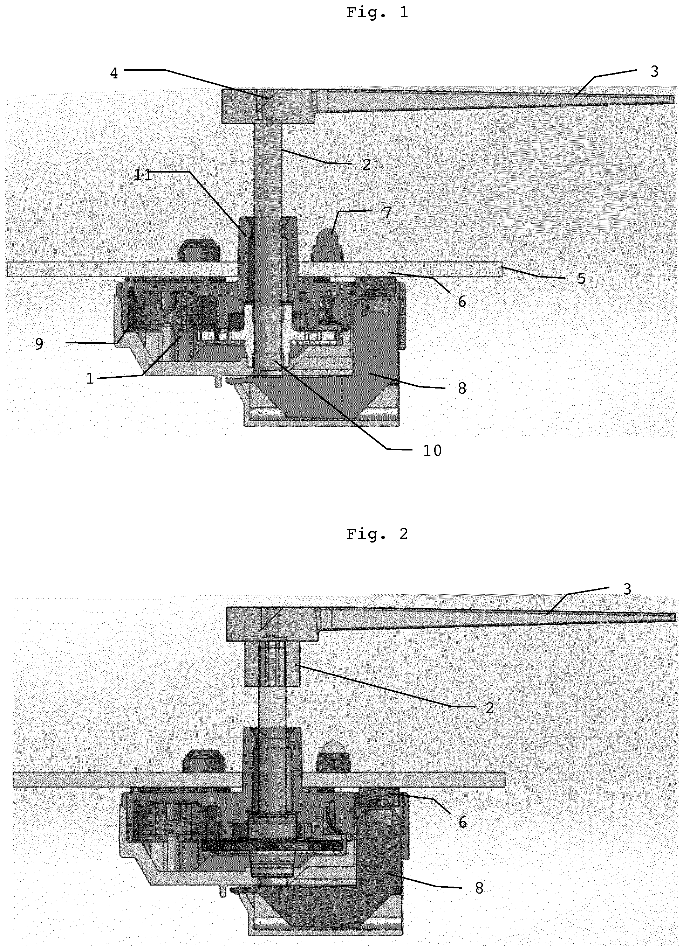

Le module représenté en figure 1 est composé :
- d'un actionneur (1) à axe creux pour l'insertion de l'axe transparent (2) de l'aiguille indicatrice (3). Un prisme (4) renvoie la lumière traversant l'axe (2) dans la direction perpendiculaire, selon la direction de l'aiguille indicatrice (3).
- d'un circuit imprimé (5) sur lequel sont montés directement l'actionneur (1), une source de lumière de type diode électroluminescente (6) et optionnellement une ou plusieurs sources de lumière de type diodes électroluminescente (7) additionnelles.
- Un guide de lumière (8) transmettant la lumière émise par la diode électroluminescente (6) jusqu'à la surface frontale (10) située à l'arrière de l'axe (2).

Le boîtier de l'actionneur (1) présente en regard de cette surface frontale (10) un trou permettant le passage du faisceau lumineux provenant du guide de lumière (8).

L'actionneur (1) est par exemple un actionneur décrit dans le brevet européen EP1660843 de la demanderesse.

L'actionneur est monté sur la face arrière du circuit imprimé (5) (montage « Rear-Mount »). La face arrière désigne, au sens du présent brevet, la face opposée au coté où se trouve l'aiguille indicatrice (3). La source lumineuse (6) est montée, sur la face arrière dans l'exemple décrit, à l'extérieur du boîtier de l'actionneur (1). L'actionneur (1) peut ainsi être conçu et réalisé pour optimiser le fonctionnement mécanique et électro-magnétique, sans qu'il ne soit nécessaire de chercher à loger en outre un organe optique à l'intérieur du boîtier de l'actionneur.

Pour amener la lumière vers le centre de l'axe (2) de l'aiguille (3), on utilise un guide de lumière (8), assurant la déviation du faisceau issu de la source lumineuse (6) de 180° par rapport à l'angle d'incidence initial. Toutefois, cet angle de 180° n'est pas limitatif. Il est possible d'utiliser une source lumineuse dont le faisceau lumineux s'étend selon une direction perpendiculaire à l'axe (2). Dans ce cas, une déviation du faisceau de 90° suffit. Une autre solution concerne l'ajout d'un prisme additionnel pour former un angle de 270° total.

Le guide de lumière (8) est protégé par un capot (11).

Le module présenté dans la suite de ce document permet d'assurer :
- Le mouvement en rotation de l'aiguille (3) via un couple mécanique transmis à l'axe (2) inséré dans un sous-composant à axe creux de l'actionneur (1)
- Un assemblage en face arrière du circuit imprimé (5)
- L'illumination de l'aiguille (3), ainsi que la stabilité de cette illumination lors du mouvement en rotation de l'aiguille (3)
- Une intégration simple et robuste du guide lumière (8) avec le couvercle de l'actionneur
- Une protection contre la pollution lumineuse liée à l'usage des sources lumineuses de type LED et à l'intégration d'un guide lumière extérieur à l'actionneur

Ces cinq fonctions sont les fonctions essentielles de la présente invention.

Par ailleurs, la configuration optique du guide lumière revêt une grande importance, puisqu'elle sera le garant de la quantité de lumière acheminée depuis la source lumineuse vers l'aiguille. Les configurations possibles de guide lumière sont multiples, autant par l'étendue des sections possibles et de leur forme, ou encore par les différentes matières considérées (PMMA, PC...).

L'objectif principal reste l'optimisation du rendement du guide tout en conservant l'encombrement minimum pour le moteur.

La figure 2 représente une vue en perspective d'un guide de lumière selon l'invention.

La configuration d'entrée du guide de lumière, i.e. la partie la plus proche de la source lumineuse, doit agir comme un collimateur et permettre d'obtenir un faisceau directif dans la première section droite du guide. Il est important de capter un maximum de lumière issue d'une source qui peut diffuser pour les sources lumineuses de type LEDs classiques jusqu'à 120°.

A cet effet, le guide de lumière présente un premier tronçon (20) cylindrique dont l'axe de symétrie est perpendiculaire au plan du circuit imprimé (5). Ce tronçon présente une jupe (22) périphérique, s'ouvrant par un orifice de section annulaire entourant la zone d'effet de la source lumineuse. La zone frontale du tronçon (20) à l'intérieur de la jupe (22) présente une surface bombée formant une lentille de collimation (21).

La forme du collimateur est optimisé de manière à obtenir une illumination quasi-identique lors de l'utilisation de LEDs avec ou sans lentilles.

Le concept optique est le suivant : le premier angle de 45° (24) permet, à partir d'un rayon incident dans l'axe du guide lumière (8), de réfléchir ce même rayon avec un angle de 90° par rapport au rayon incident. Le second angle de 45° (25) permet de réaliser la même action, et d'avoir ainsi en sortie de guide lumière (8) un faisceau concentré en centre de guide, directif, de manière à optimiser l'illumination de l'aiguille (3) et d'assurer une stabilité de l'illumination lors de la rotation de ladite aiguille.

Le diamètre du guide de lumière (8) et notamment du premier tronçon (20) doit être suffisant pour capter l'ensemble de la lumière émise par les LEDs habituellement utilisées dans ce genre d'application, et suffisamment faible pour en limiter le poids et l'encombrement. Idéalement, il présente une section comprise entre 4 et 8 mm.

Le premier tronçon (20) présente une surface extérieure tubulaire polie miroir. On entend notamment par « polie miroir » le fait que la surface ne présente aucun défaut, aucune rayure n'est visible au microscope optique, les défauts résiduels ayant une taille inférieure au micromètre.

Ce premier tronçon (20) est prolongé par un deuxième tronçon (23) s'étendant perpendiculairement, de section transversale sensiblement trapézoïdale. La surface extérieure est également polie miroir.

Chaque extrémité longitudinale présente une paroi (24, 25) inclinée à 45° et formant un miroir réfléchissant le faisceau lumineux provenant du premier tronçon (20) de 90°, afin de diriger le faisceau de sortie en direction d'une zone circulaire de sortie (26) polie.

Le guide de lumière (8) présente deux zones fonctionnelles d'appui (30 ;31) qui servent au positionnement précis du guide de lumière par rapport au circuit imprimé (5), au boîtier de l'actionneur (1) et à la source de lumière de type LED (6).

La platine arrière (30) prévue au niveau du premier tronçon (20) présente deux pattes latérales (32, 33) s'étendant dans un plan orthogonal à l'axe du premier tronçon (20).

La platine avant (31) prévue au niveau de la zone de sortie (26) présente deux pattes latérales (34, 35) s'étendant dans un plan parallèle aux pattes latérales (32, 33) du premier tronçon (20). La platine avant (31) présente une découpe correspondant à la zone de sortie (26) et est prolongée dans l'axe du deuxième tronçon (23) par une languette (36).

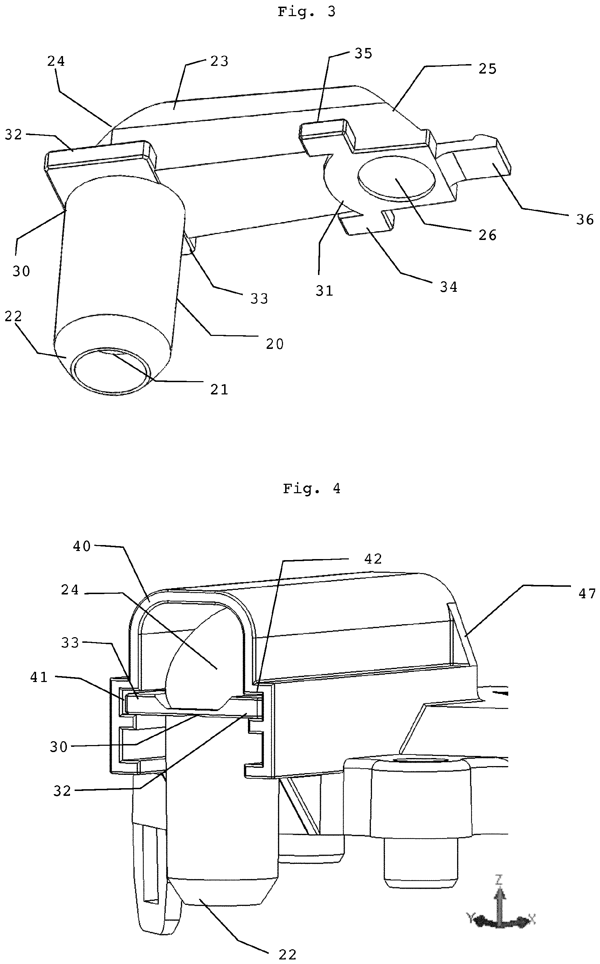

Le guide de lumière (8) est inséré, comme présenté dans la figure 3, dans une pièce de liaison (40) présentant deux glissières latérales (41, 42) coopérant à l'arrière avec les pattes latérales (32 ; 33) de la platine arrière (30) et à l'avant avec les deux pattes latérales (34, 35) de la platine avant (31).

L'intégration mécanique s'effectue via un système de glissière : le guide (8) présente des pattes latérales (32, 33, 34, 35) qui viennent s'insérer dans les glissières (41, 42) prévues à cet effet dans la pièce de liaison (40).

La partie supérieure de la pièce de liaison (40), avec glissières (41, 42), a pour but l'intégration du guide de lumière (8), ainsi que sa protection « physique ». L'assemblage présente également des surfaces planes sur les pattes latérales (32, 33) de la platine arrière (30) et sur une face externe de la pièce de liaison (40), qui feront office respectivement de zone d'application de forces et de zone de maintien lors de l'intégration mécanique du guide (8) dans la pièce de liaison (40).

La figure 4 représente une vue en coupe du module. La source de lumière (6), la lentille d'entrée (21) et le premier tronçon (20) sont centrés par rapport à l'axe optique d'entrée (50). La face inclinée à 45° (24) formant un prisme est centrée par rapport à cet axe optique d'entrée (50) pour réfléchir le faisceau lumineux selon l'axe longitudinal (51) formant un angle de 90° par rapport au l'axe optique d'entrée (50).

Ce faisceau est à nouveau réfléchi de 90° par la deuxième face inclinée à 45° (25), selon une direction (52) parallèle au faisceau incident (50), coaxiale avec l'axe de symétrie de l'axe (2) de l'aiguille indicatrice et passant par le centre de la zone de sortie (26).

Afin d'assurer un maintien mécanique sans jeu du guide de lumière (8) par rapport au boîtier du moteur, la languette (36) coopère par clipsage avec une fente (45) prévue sur la face avant du boîtier de liaison (40).

Le guide de lumière (8) est bloqué dans les trois directions de l'espace en x, y et z.

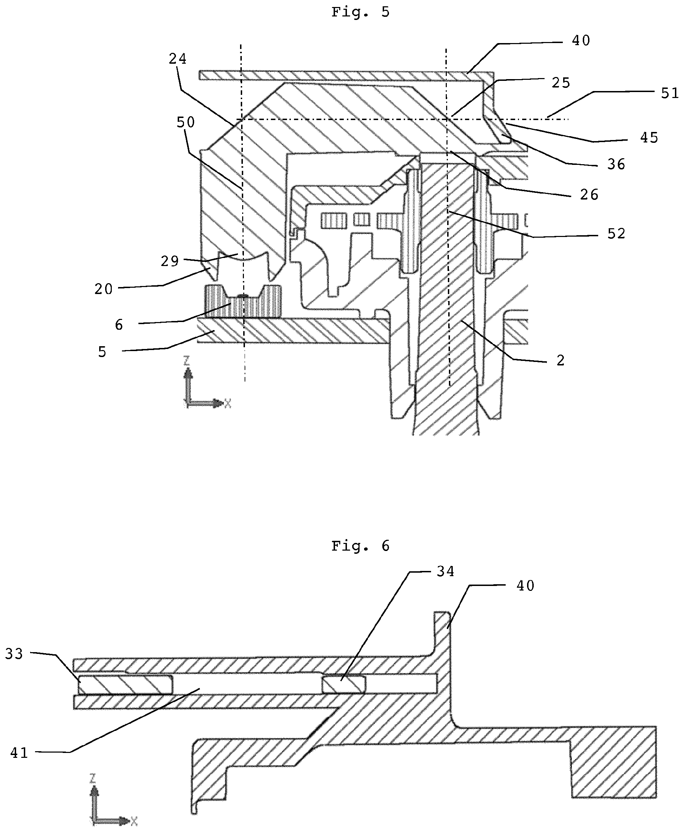

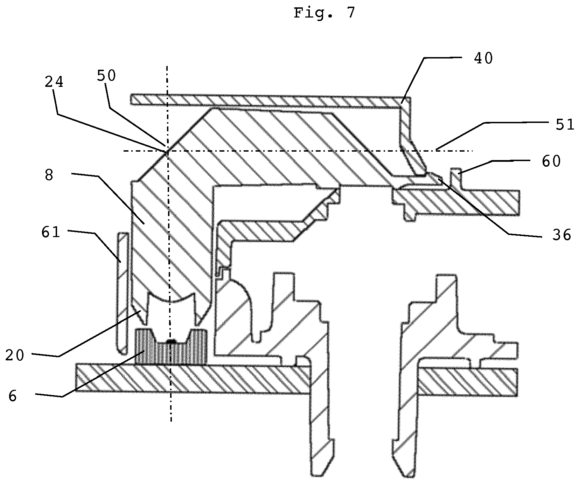

Le guide de lumière (8) présente à son extrémité une languette (36) qui permet un clipsage effectif du guide (8) avec la pièce de liaison (40), et dessinée de sorte qu'aucune particule ne puisse s'infiltrer jusqu'à l'interface optique de l'aiguille (3). Ce dispositif permet de s'assurer que les surfaces d'entrée et de sortie du guide (8) sont correctement positionnées en x par rapport d'un côté à la source lumineuse de type LED (6) et de l'autre à l'interface optique qu'est l'aiguille (3)
- En y :
   La tenue du guide en y est assurée au niveau des glissières (41, 42), dans la pièce de liaison (40). Les glissières (41, 42) ainsi que la languette (36) permettent un guidage et une tenue effective du guide de lumière (8) lors de l'insertion dudit guide dans la pièce de liaison (40).
- En z :
   Le comportement de l'ensemble formé par l'actionneur (1) et le guide (8) lors d'une sollicitation extérieure de type vibration est un facteur relativement important caractérisant la robustesse et le risque de phénomène de résonnance du système. Pour ce faire, les glissières (41, 42) présentent une section définie telle que la surface inférieure est perpendiculaire aux axes optiques (50, 52) sur toute la longueur de la glissière, cette surface inférieure faisant office de zone de glissement pour les pattes latérales (32, 33 ; 34, 35) du guide de lumière (8), et la surface supérieure de ladite glissière présentant au moins un décrochement, comme visible en figure 5, permettant une réduction progressive du jeu admissible en z du guide par rapport à la pièce de liaison (40).

Le boîtier de liaison (40) présente par ailleurs des raidisseurs (47) disposés à l'avant pour assurer une surface d'appui nécessaire lors de l'insertion de l'aiguille (3) dans l'actionneur (1). Lors de l'insertion de l'aiguille (3), la surface d'appui est soumise à un niveau de contrainte important, raison pour laquelle des renforts latéraux (47) sont ajoutés pour la rigidifier.

La figure 6 représente l'assemblage de l'actionneur (1) avec le guide de lumière (8), en mettant plus particulièrement l'accent sur les interfaces de réduction de la pollution lumineuse inhérentes à l'usage d'une source de lumière de type LED (6) et d'un guide (8) situé à l'extérieur de l'actionneur (1). La languette (36) se situant dans la continuité du faisceau directif suivant l'axe optique (51) après réflexion du faisceau incident suivant l'axe (50) sur le premier angle de 45° (24), une certaine quantité de lumière ressort par l'extrémité de ladite languette. L'ajout d'un monticule (60) sur le capot (11) permet d'arrêter ce faisceau, et ainsi d'éviter qu'il ne vienne polluer l'espace situé à proximité du moteur, évitant ainsi d'incommoder l'usager du véhicule ou porter préjudice au bon fonctionnement des différentes interfaces optiques permettant par exemple l'illumination des témoins lumineux. Cette solution est adaptée notamment aux situations où l'axe et la roue sont d'un seul tenant et translucide.

Pour les mêmes raisons, une surface tubulaire (61), liée à l'actionneur (1), vient entourer en partie le tronçon cylindrique (20) du guide lumière (8) ainsi que la source lumineuse (6), permettant ainsi d'assurer une pollution lumineuse minimale de l'ensemble formé de l'actionneur (1), du guide de lumière (8) et de la source lumineuse (6) vis-à-vis de l'espace se situant à proximité dudit ensemble.

L'ensemble des interfaces du module conduisant la lumière, à savoir le guide de lumière (8) et/ou l'axe transparent de la roue de sortie dans le cas d'un module tel que décrit en figure 2, peuvent être légèrement teintées, de manière à modifier la teinte du faisceau lumineux issu de la source lumineuse de type LED (6) et permettant l'illumination de l'aiguille indicatrice (3).

Cette spécificité présente l'avantage pour le client final de pouvoir adapter finement la couleur de ladite aiguille indicatrice, lorsque celle-ci est illuminée, tout en conservant la possibilité d'un seul type de LED utilisée sur le circuit imprimé.

## Revendications

1. Module indicateur de tableau de bord comprenant
un actionneur électrique (1),
une aiguille éclairée (3),
un circuit imprimé (5),
une source lumineuse (6),
un guide optique (8),
l'actionneur électrique (1) étant apte à entraîner l'aiguille éclairée (3) et le circuit imprimé (5) supportant au moins la source lumineuse (6), ledit actionneur présentant des connections électriques fixées sur le circuit imprimé (5), et ledit actionneur étant positionné dans un boîtier, **caractérisé en ce que** la source lumineuse (6) d'éclairage de l'aiguille (3) est disposée en une zone située à l'extérieur de la zone couverte par l'actionneur (1) et **en ce que** ledit module comporte le guide optique (8) à l'extérieur du boîtier de l'actionneur pour transmettre la lumière produite par la source lumineuse (6) jusqu'à une ouverture frontale sur le boîtier de l'actionneur positionnée à la face arrière de l'actionneur (1) selon une direction coaxiale avec soit d'une part un axe creux de la roue de sortie dudit actionneur destiné à recevoir ladite aiguille éclairée, soit d'autre part avec un axe transparent de la roue de sortie (1) destiné à recevoir ladite aiguille éclairée (3), ledit guide optique (8) comportant des moyens pour transmettre un faisceau directif coaxial à l'axe de ladite aiguille éclairée (3).

2. Module indicateur de tableau de bord selon la revendication 1 **caractérisé en ce que** ledit guide de lumière (8) est formé d'un bloc transparent monolithique, présentant au moins un prisme (24, 25) présentant des prolongements latéraux (32, 33 ; 34, 35) s'étendant à l'extérieur de la section du chemin optique, lesdits prolongements (32, 33 ; 34, 35) assurant le positionnement et la tenue mécanique dudit guide de lumière (8) par rapport au boîtier de l'actionneur (1).

3. Module indicateur de tableau de bord selon la revendication 1 ou 2 **caractérisé en ce que** la zone d'entrée dudit guide de lumière (8) présente une jupe de collimation (22) présentant des surfaces intérieure et extérieure polies miroir, entourant une lentille (21).

4. Module indicateur de tableau de bord selon la revendication 2 ou 3 **caractérisé en ce que** les surfaces extérieures entourant le chemin optique sont polies miroir, et ne sont en contact avec aucun élément porteur à l'exception d'une platine de fixation (31) et desdits prolongements latéraux (32, 33 ; 34, 35 ; 36).

5. Module indicateur de tableau de bord selon l'une quelconque des revendications précédentes **caractérisé en ce que** la zone de sortie (26) dudit guide de lumière (8) est entourée par une zone de couplage mécanique (31) avec le boîtier dudit actionneur (1), présentant un trou entourant l'interface optique de sortie (26) et une surface annulaire périphérique complémentaire de la surface entourant l'orifice axial arrière du boîtier de l'actionneur (1).

6. Module indicateur de tableau de bord selon l'une quelconque des revendications précédentes **caractérisé en ce que** l'actionneur (1) présente au moins un monticule (60, 61) pour la réduction de la pollution lumineuse, la surface dudit monticule (60, 61) étant située dans le prolongement de d'une languette (36) du guide de lumière (8) suivant l'axe optique (51).

7. Module indicateur de tableau de bord selon la revendication précédente caractérisé ce qu'une interface tubulaire (61) entoure en partie le guide de lumière (8) ainsi que la source lumineuse (6).

8. Module indicateur de tableau de bord selon la revendication 5 **caractérisé en ce que** ladite zone de couplage mécanique est prolongée par au moins un ergot (32, 33 ; 34, 35 ; 36) de positionnement par rapport à des zones de guidage complémentaires prévues sur le boitier de l'actionneur (1), et un ergot de clipsage (36) assurant le verrouillage de la zone de sortie sur le boîtier de l'actionneur (1).

9. Module indicateur de tableau de bord selon l'une quelconque des revendications précédentes **caractérisé en ce que** ledit circuit imprimé (5) comporte en outre au moins une source lumineuse additionnelle (7), dirigée en direction opposée à la source éclairant ledit guide de lumière.

10. Module indicateur de tableau de bord selon l'une quelconque des revendications précédentes **caractérisé en ce que** le guide de lumière (8) présente une zone d'entrée dudit guide de lumière présente une jupe de collimation (22) présentant des surfaces intérieure et extérieure polies miroir, entourant une lentille (21), **en ce que** les surfaces extérieures entourant le chemin optique sont polies miroir, et ne sont en contact avec aucun élément porteur à l'exception de la platine de fixation (31) et desdits prolongements latéraux (32, 33, 34, 35, 36) et **en ce que** la zone de sortie (26) dudit guide de lumière est entourée par une zone de couplage mécanique (31) avec le boîtier dudit actionneur, présentant un trou entourant l'interface optique de sortie et une surface annulaire périphérique complémentaire de la surface entourant l'orifice axial arrière du boîtier de l'actionneur.

## Patentansprüche

1. Armaturenbrett-Anzeigemodul, umfassend einen elektrischen Aktuator (1), einen Leuchtzeiger (3), eine Leiterplatte (5), eine Lichtquelle (6), einen Lichtleiter (8), wobei der elektrische Aktuator (1) in der Lage ist, den Leuchtzeiger (3) anzusteuern, und wobei die Leiterplatte (5) mindestens die Lichtquelle (6) trägt, wobei der Aktuator elektrische Verbindungen aufweist, die an der Leiterplatte (5) befestigt sind, und wobei der Aktuator in einem Gehäuse angeordnet ist, **dadurch gekennzeichnet, dass** die Lichtquelle (6) zur Beleuchtung des Zeigers (3) in einem Bereich außerhalb des von dem Aktuator (1) abgedeckten Bereichs angeordnet ist und dass das Modul den Lichtleiter (8) außerhalb des Gehäuses des Aktuators umfasst, um das von der Lichtquelle (6) erzeugte Licht zu einer vorderen Öffnung des Gehäuses des Aktuators zu übertragen, die an der Rückseite des Aktuators (1) in einer Richtung koaxial zu einer der beiden Hohlachsen des Ausgangsrads des Aktuators angeordnet ist, die dazu bestimmt ist, den Leuchtzeiger aufzunehmen, oder andererseits mit einer transparenten Achse des Ausgangsrads (1), das dazu bestimmt ist, den Leuchtzeiger (3) aufzunehmen, wobei der Lichtleiter (8) Mittel zur Übertragung eines Richtstrahls koaxial zur Achse des Leuchtzeigers (3) aufweist.

2. Armaturenbrett-Anzeigemodul nach Anspruch 1, **dadurch gekennzeichnet, dass** der Lichtleiter (8) aus einem monolithischen transparenten Block gebildet ist, der mindestens ein Prisma (24, 25) mit seitlichen Verlängerungen (32, 33; 34, 35) aufweist, die sich außerhalb des Abschnitts des Lichtweges erstrecken, wobei die Verlängerungen (32, 33; 34, 35) die Positionierung und die mechanische Festigkeit des Lichtleiters (8) in Bezug auf das Gehäuse des Aktuators (1) gewährleisten.

3. Armaturenbrett-Anzeigemodul nach Anspruch 1 oder 2, **dadurch gekennzeichnet, dass** der Eingangsbereich des Lichtleiters (8) eine Kollimationsschürze (22) mit hochglanzpolierten Innen- und Außenflächen aufweist, die eine Linse (21) umgibt.

4. Armaturenbrett-Anzeigemodul nach Anspruch 2 oder 3, **dadurch gekennzeichnet, dass** die den Lichtweg umgebenden Außenflächen hochglanzpoliert sind und mit keinem Tragelement außer einer Befestigungsplatte (31) und den seitlichen Verlängerungen (32, 33; 34, 35; 36) in Kontakt stehen.

5. Armaturenbrett-Anzeigemodul nach einem der vorstehenden Ansprüche, **dadurch gekennzeichnet, dass** der Ausgangsbereich (26) des Lichtleiters (8) von einem Bereich der mechanischen Kopplung (31) mit dem Gehäuse des Aktuators (1) umgeben ist, der ein die optische Ausgangsschnittstelle (26) umgebendes Loch und eine ringförmige Umfangsfläche aufweist, die zu der Fläche komplementär ist, die die hintere axiale Öffnung des Gehäuses des Aktuators (1) umgibt.

6. Armaturenbrett-Anzeigemodul nach einem der vorhergehenden Ansprüche, **dadurch gekennzeichnet, dass** der Aktuator (1) mindestens eine Wölbung (60,61) zur Verringerung der Lichtverschmutzung aufweist, wobei sich die Oberfläche der Wölbung (60, 61) in der Verlängerung einer Zunge (36) des Lichtleiters (8) entlang der optischen Achse (51) befindet.

7. Armaturenbrett-Anzeigemodul nach dem vorhergehenden Anspruch, **dadurch gekennzeichnet, dass** eine röhrenförmige Schnittstelle (61) sowohl den Lichtleiter (8) als auch die Lichtquelle (6) teilweise umgibt.

8. Armaturenbrett-Anzeigemodul nach Anspruch 5, **dadurch gekennzeichnet, dass** der Bereich der mechanischen Kopplung durch mindestens eine Positionierungsnase (32, 33; 34, 35; 36) in Bezug auf komplementäre Führungsbereiche, die auf dem Gehäuse des Aktuators (1) vorgesehen sind, und eine Einrastnase (36) verlängert ist, die die Verriegelung des Ausgangsbereichs auf dem Gehäuse des Aktuators (1) gewährleistet.

9. Armaturenbrett-Anzeigemodul nach einem der vorhergehenden Ansprüche, **dadurch gekennzeichnet, dass** die Leiterplatte (5) außerdem mindestens eine zusätzliche Lichtquelle (7) aufweist, die in die entgegengesetzte Richtung zu der Quelle gerichtet ist, die den Lichtleiter beleuchtet.

10. Armaturenbrett-Anzeigemodul nach einem der vorhergehenden Ansprüche, **dadurch gekennzeichnet, dass** der Lichtleiter (8) einen Eingangsbereich aufweist, wobei der Lichtleiter eine Kollimationsschürze (22) mit hochglanzpolierten Innen - und Außenflächen aufweist, die eine Linse (21) umgibt, und dass die den Lichtweg umgebenden Außenflächen hochglanzpoliert sind, und mit keinem Tragelement außer der Befestigungsplatte (31) und den seitlichen Verlängerungen (32, 33, 34, 35, 36) in Kontakt stehen, und dass der Ausgangsbereich (26) des Lichtleiters von einem Bereich der mechanischen Kopplung (31) mit dem Gehäuse des Aktuators umgeben ist, der ein die optische Ausgangsschnittstelle umgebendes Loch und eine ringförmige Umfangsfläche aufweist, die zu der Fläche komplementär ist, die die hintere axiale Öffnung des Gehäuses des Aktuators umgibt.

## Claims

1. Dashboard indicator module including an electric actuator (1), an illuminated needle (3), a printed circuit (5), a light source (6), and an optical guide (8), the electric actuator (1) being suitable for driving the illuminated needle (3) and the printed circuit (5) supporting at least the light source (6), said actuator having electrical connections secured to the printed circuit (5) and said actuator being positioned in a housing, **characterized in that** the light source (6) for illuminating the needle (3) is arranged in a region located outside the region covered by the actuator (1), and **in that** said module comprises the optical guide (8) outside the housing of the actuator in order to transmit the light produced by the light source (6) to afront opening in the actuator housing, which opening is positioned in the rear face of the actuator (1), in adirection coaxial with either a hollow shaft of the output wheel of said actuator, which hollow shaft is intended to receive said illuminated needle, or a transparent shaft of the output wheel (1), which transparent shaft is intended to receive said illuminated needle (3), said optical guide (8) comprising means for transmitting a directional beam that is coaxial with the shaft of said illuminated needle (3).

2. Dashboard indicator module according to claim 1, **characterized in that** said light guide (8) is formed of a monolithic transparent block, having at least one prism (24, 25) which has lateral extensions (32, 33; 34, 35) that extend outside the section of the optical path, said extensions (32, 33; 34, 35) ensuring the positioning and mechanical strength of said light guide (8) relative to the housing of the actuator (1).

3. Dashboard indicator module according to either claim 1 or claim 2, **characterized in that** the entry region of said light guide (8) has acollimating skirt (22) having mirror-polished inner and outer surfaces and surrounding a lens (21).

4. Dashboard indicator module according to either claim 2 or claim 3, **characterized in that** the outer surfaces surrounding the optical path are mirror polished, and are not in contact with any support element except a mounting plate (31) and said lateral extensions (32, 33; 34, 35; 36).

5. Dashboard indicator module according to any of the preceding claims, **characterized in that** the exit region (26) of said light guide (8) is surrounded by a region (31) for mechanical coupling to the housing of said actuator (1), said mechanical coupling region having a hole surrounding the optical output interface (26) and a peripheral annular surface complementary to the surface surrounding the rear axial aperture in the actuator housing (1).

6. Dashboard indicator module according to any of the preceding claims, **characterized in that** the actuator (1) has at least one protrusion (60, 61) for reducing light pollution, the surface of said protrusion (60, 61) being located in the extension of atab (36) of the light guide (8) along the optical axis (51).

7. Dashboard indicator module according to the preceding claim, **characterized in that** a tubular interface (61) partially surrounds the light guide (8) as well as the light source (6).

8. Dashboard indicator module according to claim 5, **characterized in that** said mechanical coupling region is extended by at least one lug (32, 33; 34, 35; 36) for positioning relative to complementary guide regions provided on the actuator housing (1), and asnap-fitting lug (36) for locking the exit region on the actuator housing (1).

9. Dashboard indicator module according to any of the preceding claims, **characterized in that** said printed circuit (5) further comprises at least one additional light source (7), which is directed in the direction opposite to the source illuminating said light guide.

10. Dashboard indicator module according to any of the preceding claims, **characterized in that** the light guide (8) has an entry region of said light guide has a collimating skirt (22) having mirror-polished inner and outer surfaces and surrounding a lens (21), **in that** the outer surfaces surrounding the optical path are mirror polished, and are not in contact with any support element except the mounting plate (31) and said lateral extensions (32, 33, 34, 35, 36), and **in that** the exit region (26) of said light guide is surrounded by a region (31) for mechanical coupling to the housing of said actuator, said mechanical coupling region having a hole surrounding the optical output interface and a peripheral annular surface complementary to the surface surrounding the rear axial aperture in the actuator housing.
